# FASCICULE DE BREVET EUROPEEN

(11) **EP 1 552 471 B1**
(45) Date de publication et mention de la délivrance du brevet: **03.05.2006**
(21) Numéro de dépôt: 02767034.8
(22) Date de dépôt: 18.10.2002
(51) Int. Cl.: G06K 19/077, G06K 7/10, G04G 1/00, G01R 31/316

(54) **TRANSPONDEUR ET OUTIL POUR LA LECTURE ET/OU L'ECRITURE DE DONNEES DANS LE TRANSPONDEUR**
TRANSPONDER UND WERKZEUG ZUM LESEN UND/ODER SCHREIBEN VON DATEN IN DEN TRANSPONDER
TRANSPONDER AND TOOL FOR READING AND/OR WRITING DATA IN SAID TRANSPONDER

(43) Date de publication de la demande: 13.07.2005
(73) Titulaire: MBBS Holding SA, CH-2035 Corcelles (CH)
(72) Inventeur: STALDER, Philippe, Deceased (CH); MAILLARD, Alain, CH-2300 La Chaux. de-Fonds (CH)
(74) Mandataire: P&TS Patents & Technology Surveys SA
(86) Numéro de dépôt international: PCT/CH2002/000570
(87) Numéro de publication internationale: WO 2004/036495

(56) Documents cités:
- EP-A- 1 065 791
- WO-A-00/28339
- WO-A-99/35857

## Description

La présente invention concerne un transpondeur ainsi qu'un outil de lecture et/ou d'écriture pouvant servir par exemple au test et/ou à la programmation du transpondeur.

Les transpondeurs sont des circuits électroniques généralement passifs comportant essentiellement un circuit intégré dans lequel peuvent être stockées des données et une antenne connectée électriquement au circuit intégré et permettant de lire et/ou d'enregistrer ces données à distance à l'aide d'un lecteur approprié. Les transpondeurs sont utilisés dans les domaines d'application les plus divers et servent le plus souvent à identifier, à l'aide des données qu'ils contiennent, un objet auquel ils sont attachés ou dans lequel ils sont insérés. L'objet est ainsi marqué par le transpondeur. Les transpondeurs sont très souvent de petite dimension afin d'être peu visibles ou afin de pouvoir être insérés dans des objets dans lesquels l'espace disponible est limité, comme par exemple dans des boîtiers de montres.

L'antenne des transpondeurs est généralement constituée d'une bobine d'induction faite d'un fil de cuivre très fin. Dans les transpondeurs de l'art antérieur, les deux extrémités de la bobine sont en général fixées, par exemple soudées, soit sur un petit circuit imprimé sur lequel est également soudé le circuit intégré, tel que décrit par exemple dans la demande internationale WO 96/07982, soit directement sur le circuit intégré. De tels transpondeurs sont très fragiles, principalement à cause des risques de déformation de la bobine et/ou des risques de rupture du circuit électrique, principalement près des soudures, à la suite de torsions du fil de cuivre. La position de l'antenne par rapport au circuit intégré doit donc être la plus stable possible. L'antenne et le circuit intégré sont très souvent maintenus ensemble, par exemple dans une résine non conductrice électriquement, à l'intérieur d'un boîtier qui assure au transpondeur une protection contre les agressions extérieures et évite la torsion, et donc la rupture, des fils de la bobine.

Les transpondeurs se présentent ainsi généralement sous la forme de petits circuits électroniques souvent rigides, dont la taille est principalement déterminée par les dimensions extérieures de l'antenne, qui, pour lui assurer un gain suffisant, doivent rester supérieures à certaines valeurs.

Or, dans certaines applications, il est difficile d'intégrer discrètement un tel transpondeur, précisément à cause de la taille de l'antenne. Ainsi dans le cas d'une montre, par exemple, le transpondeur est souvent placé sous le verre, à la périphérie du cadran, car c'est pratiquement le seul endroit permettant de loger l'antenne. Une telle solution n'est cependant pas toujours applicable, principalement pour des raisons esthétiques. Une autre solution consiste alors à fixer le transpondeur sur le fond de la montre dans lequel il peut être facilement dissimulé. Le désavantage de cette variante est que, le fond pouvant souvent être facilement retiré du boîtier de la montre, il devient facile de détruire ou falsifier les données d'identification de la montre contenues dans le circuit intégré en détachant le transpondeur de la montre ou en échangeant le fond avec le fond d'une autre montre, par exemple.

Le document WO 00/28339 divulge un système pour tester des circuits intégrés de transpondeurs. Ce document représente la base pour les préambules des revendications 4 et 11.

Un des buts de la présente invention est donc de proposer un transpondeur dont l'antenne peut être placée sur n'importe quelle partie appropriée de l'objet à marquer, indépendamment de l'emplacement choisi pour le circuit intégré pouvant contenir des données parfois sensibles.

Il a ainsi été imaginé, dans le cadre du développement de la présente invention, de laisser une certaine longueur à chaque fil à l'extrémité de la bobine avant de les fixer sur le circuit intégré, permettant ainsi d'éloigner l'antenne du circuit intégré d'une distance maximale équivalente à la longueur de ces fils. L'antenne et le circuit intégré peuvent alors être traités comme deux parties distinctes d'un même transpondeur, reliées entre elles par deux fils assurant leur connexion électrique. Ces deux parties du transpondeur peuvent alors être placées dans des emplacements différents de l'objet à marquer, la distance entre ces emplacements étant toutefois limitée par la longueur des fils. Il a par exemple été imaginé, dans le cas d'une montre, de lier le circuit intégré à la carrure du boîtier ou au mouvement de la montre, afin d'éviter qu'il soit facilement échangé ou retiré, tandis que la bobine serait fixée sur le fond de la montre où elle peut aisément être dissimulée.

Cette solution, si elle permet de choisir indépendamment l'emplacement de chacune des deux parties du transpondeur, présente également des limitations importantes. En particulier, il n'est pas judicieux d'installer chacune des deux parties d'un tel transpondeur sur des éléments de l'objet à marquer destinés à être complètement détachés l'un de l'autre. En effet, même une fois détachés, ces deux éléments resteraient en permanence reliés par les fils fins et fragiles des extrémités de la bobine qui risqueraient d'être soumis à des contraintes mécaniques pouvant provoquer leur rupture, endommageant ainsi le transpondeur. Si, pour diminuer ce risque, la longueur des fils entre les deux parties du transpondeur est augmentée, permettant ainsi par exemple d'effectuer certaines manipulations sur un des deux éléments détachés de l'objet sans exercer de trop fortes contraintes sur les fils le reliant au deuxième élément détaché, le problème qui se pose alors est celui du logement correct des fils lors du remontage de l'objet. De plus, dans le cas d'une montre par exemple, le fond étant lié de manière permanente à la carrure du boîtier par les fils de l'antenne, il ne pourrait être changé facilement.

Un autre but de l'invention est donc de proposer un transpondeur dont une partie puisse être fixée sur un élément de l'objet à marquer pouvant être entièrement détaché d'un autre élément de l'objet à marquer sur lequel est fixée une autre partie du transpondeur, sans présenter les inconvénients décrits ci-dessus.

Un autre but de la présente invention est de proposer un transpondeur dont l'assemblage et le positionnement précis sur l'objet à marquer est facilité.

Ces buts sont atteints par un transpondeur possédant les caractéristiques de la revendication 1, des variantes avantageuses étant décrites par les revendications dépendantes.

En particulier, ce but est atteint par un transpondeur comprenant un circuit intégré et une antenne connectés entre eux de manière amovible et comprenant au moins un élément intermédiaire de connexion assurant la connexion amovible de l'antenne au circuit intégré. La connexion amovible de l'antenne au circuit intégré permet ainsi de séparer complètement le transpondeur en deux parties, l'élément intermédiaire de connexion permettant en outre, dans une variante de l'invention, de renforcer mécaniquement au moins une partie des éléments de cette connexion tout en facilitant leur fixation précise au moment de l'assemblage du transpondeur.

DE 19910768 décrit une carte à puce comprenant un circuit intégré et une antenne intégrée à la carte. Le circuit intégré est également connecté de manière amovible à l'antenne, le but étant de permettre l'échange du circuit intégré de la carte. Le contact électrique entre le circuit et l'antenne se fait cependant par pression du circuit intégré directement contre les extrémités de la bobine servant d'antenne, qui est intégrée à la carte. Une telle construction, si elle permet la connexion amovible d'un circuit intégré à son antenne à l'intérieur d'une structure unique, n'est pas applicable à un transpondeur dont l'antenne est fixée à un élément d'un objet mécanique devant pouvoir être détaché facilement et fréquemment de l'élément auquel est fixé le circuit intégré du transpondeur, à plus forte raison lorsque l'assemblage de ces deux éléments de l'objet à marquer implique des mouvements particuliers, par exemple de vissage. En effet, la finesse et la fragilité des parties en contact, en particulier des extrémités de la bobine, rendrait le transpondeur délicat et ne garantirait pas sa longévité dans de tels objets. De plus, le positionnement précis, sur les différents éléments de l'objet à marquer, des extrémités de la bobine d'une part et du circuit intégré d'autre part afin qu'ils soient parfaitement alignés lorsque l'objet est assemblé, est une tâche qui peut s'avérer difficile et coûteuse, voire impossible à réaliser suivant la configuration des éléments à assembler.

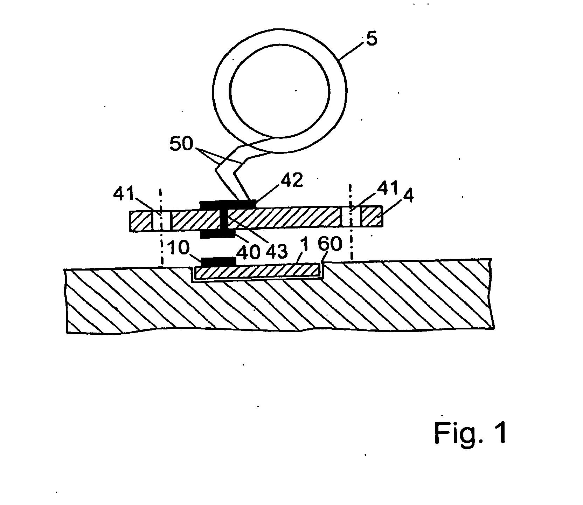

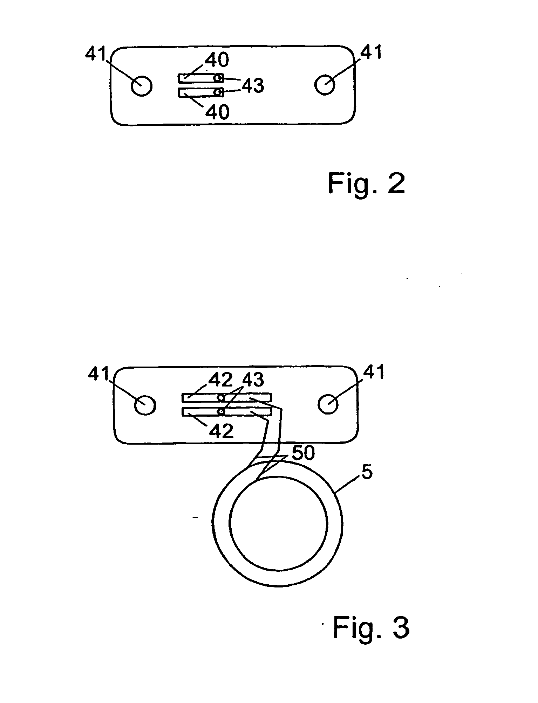

La présente invention sera mieux comprise à l'aide de la description de sa version préférentielle donnée ici à titre d'exemple et illustrée par les figure 1 à 4, où:
la figure 1 représente un transpondeur selon l'invention,
la figure 2 représente une vue de dessous de l'élément intermédiaire de connexion,
la figure 3 représente une vue de dessus de l'élément intermédiaire de connexion attaché à l'antenne,
la figure 4 illustre un outil pour la lecture et/ou l'écriture de données dans le circuit intégré du transpondeur selon l'invention.

Le transpondeur selon la version préférentielle de l'invention comprend un circuit intégré 1 comportant dans cet exemple sur une de ses faces deux zones de contact 10 destinées à être connectées à l'antenne 5. Chaque zone de contact 10 est par exemple formée d'une fine couche de matière conductrice déposée sur une partie délimitée de la surface du circuit intégré. Les zones de contact 10 sont liées, à l'intérieur du circuit intégré, aux points non représentés du circuit destinés à recevoir et émettre les signaux de l'antenne 5, selon une des méthodes usuellement utilisées pour la liaison des points de contact des circuits intégrés.

L'antenne 5 du transpondeur est par exemple constituée d'une bobine formée à partir d'un fil de cuivre. Les deux extrémités 50 de la bobine 5 sont fixées, par exemple soudées ou collées, sur un élément intermédiaire de connexion 4, de préférence sur des zones de contact permanent 42 prévues à cette effet. Chaque zone de contact permanent 42 est connectée électriquement par une liaison, par exemple par un trou métallisé 43, à une zone de contact 40 située de préférence sur l'autre face de l'élément intermédiaire de connexion 4. Les zones de contact 40 de l'élément intermédiaire de connexion 4 sont disposées de manière à pouvoir être connectées avec les zones de contact 10 du circuit intégré 1.

L'élément intermédiaire de connexion 4 est dans cet exemple un circuit imprimé 4. Les zones de contact 40 sont alors formées par des pistes conductrices sur une des faces du circuit imprimé 4, tandis que les zones de contact permanent 42 sont des pistes conductrices sur la face opposée. Elles sont reliés électriquement entre elles de la manière évoquée plus haut par des vias 43 pratiqués à travers le circuit imprimé.

Le circuit intégré 1 est par exemple inséré et maintenu dans un logement 60 pratiqué à la surface d'un premier élément 6 de l'objet à marquer, tandis que l'antenne 5 est fixée sur un deuxième élément non représenté du même objet, destiné à être assemblé au premier élément 6. Le circuit imprimé 4 est lié de façon permanente à l'antenne 5 par les extrémités 50 de la bobine, ainsi qu'expliqué plus haut. Le deuxième élément non représenté de l'objet à marquer sur lequel l'antenne 5 est fixée est par conséquent également lié de façon permanente à l'élément intermédiaire de connexion 4. Ce dernier n'étant cependant pas lié de façon permanente au reste du transpondeur, le deuxième élément non représenté peut être complètement détaché du premier élément 6 sans endommager le transpondeur.

Le circuit imprimé 4 comporte de préférence des éléments de fixation 41 permettant de le fixer facilement dans une position précisément déterminée, par exemple directement par dessus le circuit intégré 1 sur le premier élément 6 de l'objet à marquer. Dans cet exemple, les éléments de fixation sont des trous de fixation 41 dont l'emplacement correspond avec celui de filetages non représentés sur le premier élément 6 et dont la position par rapport aux zones de contact 40 est prédéterminée avec précision afin d'assurer un alignement correct de ces dernières avec les zones de contact 10 du circuit intégré 1 lorsque le circuit imprimé 4 est fixé sur le premier élément 6.

Il apparaîtra clairement à l'homme du métier que d'autres éléments de fixation 41 de l'élément intermédiaire de connexion 4 sont envisageables. Ainsi le circuit imprimé 4 peut par exemple être maintenu sur le premier élément 6 de l'objet à marquer par des pinces ou des clips se trouvant à la surface de ce dernier. Le circuit imprimé 4 peut également comporter lui-même des clips coopérant avec des encoches sur le deuxième élément 6, etc.

De la même manière, l'élément intermédiaire de connexion 4 peut être très différent du circuit imprimé cité ci-dessus à titre d'exemple. Il peut s'agir en particulier de tout support comportant des zones de contact 40 aptes d'une part à entrer en contact avec les zones de contact 10 du circuit intégré 1 et pouvant d'autre part être connectées électriquement, de façon permanente ou amovible, avec les extrémités 50 de l'antenne 5. Il peut s'agir par exemple d'un connecteur constitué d'une pièce en matière isolante dans lequel sont maintenues au moins deux pièces métalliques possédant d'un côté une zone de contact plate et de l'autre côté des moyens pour fixer, par exemple clipser, visser ou souder, un fil conducteur. Quel que soit le type d'élément intermédiaire de connexion 4 utilisé, ce dernier comportera de préférence des éléments de fixation adaptés permettant le positionnement précis de ses zones de contact 40 sur les zones de contact 10 du circuit intégré 1.

Lors du montage de l'objet marqué, l'élément de connexion 4 est d'abord fixé sur le premier élément 6 de la façon expliquée ci-dessus. Le deuxième élément non représenté peut ensuite être assemblé au premier élément 6 selon les procédures habituelles de montage de l'objet. Dans l'objet assemblé, chaque zone de contact 10 du circuit intégré 1 est en contact électrique avec une des extrémités 50 de l'antenne 5 par l'intermédiaire d'une zone de contact 40 de l'élément intermédiaire de connexion 4, d'une liaison 43 et d'une zone de contact permanent 42. Le transpondeur selon l'invention est alors fonctionnel et des informations peuvent être lues et/ou écrites dans son circuit intégré 1.

Le transpondeur selon l'invention est ainsi constitué d'au moins deux parties, dont une comprend le circuit intégré 1 et dont une autre comprend l'antenne 5. Ces deux parties peuvent être connectées électriquement entre elles à travers des contacts électriques amovibles, représentés dans cet exemple par les zones de contact 10 et 40, permettant ainsi au transpondeur d'être entièrement fonctionnel. Les contacts amovibles permettent cependant également à l'antenne 5 d'être momentanément complètement séparée du circuit intégré 1 sans risquer d'endommager le transpondeur.

Dans un exemple d'application, l'objet à marquer à l'aide du transpondeur de l'invention est une montre dont le boîtier possède un fond amovible pouvant être séparé de la carrure, facilitant ainsi l'accès au mouvement de la montre lors des travaux de réparation ou d'entretien de la montre. Le transpondeur sert par exemple à stocker le numéro de série de la montre, l'identité du propriétaire, les dates des divers entretiens, etc.

Pour des raisons de protection contre les falsification, le circuit - intégré 1 du transpondeur est de préférence logé dans la carrure du boîtier de la montre, voire directement sur le mouvement. L'antenne 5, en revanche, généralement constituée d'une bobine plate et circulaire, est fixée contre le fond du boîtier où son intégration et son camouflage sont plus faciles. Le circuit imprimé 4 faisant office d'élément intermédiaire de connexion et sur lequel les extrémités 50 de l'antenne 5 sont soudées est ainsi également lié au fond du boîtier. Pour des raisons de place et afin de diminuer les risques d'endommagement, les fils 50 reliant l'élément intermédiaire de connexion 4 à l'antenne 5 sont le plus court possible tout en étant suffisamment longs pour permettre un démontage et un assemblage aisés des divers éléments de la montre.

En cas de besoin, par exemple pour une réparation ou un entretien périodique du mouvement, le fond du boîtier, peut être retiré selon la procédure habituelle au type de montre en question. Cette opération peut consister par exemple en un dévissage complet du fond par rapport à la carrure, du dévissage de vis maintenant le fond contre la carrure, etc. Le fond du boîtier, qui est encore relié à la carrure par les fils 50, est écarté autant que possible de son logement sur la carrure afin de permettre le désassemblage de l'élément intermédiaire de connexion 4 de la carrure. Une fois l'élément intermédiaire de connexion 4 détaché de la carrure, le fond du boîtier peut être entièrement séparé de la carrure sans que des attaches ne subsistent entre les deux éléments du boîtier, permettant, par exemple, un accès optimal au mouvement de la montre.

Lors du remontage de la montre, les mêmes opérations sont effectuées dans l'ordre inverse: l'élément intermédiaire de connexion 4 est d'abord fixé de manière à ce que les contacts amovibles soient rétablis, puis le fond du boîtier est fixé à la carrure selon la procédure d'assemblage établie par le fabricant de la montre. Les contacts entre le circuit intégré 1 et l'antenne 5 étant à nouveau établis, le transpondeur est à nouveau fonctionnel.

Ces opérations de séparation et d'assemblage des deux éléments du boîtier peuvent être répétées pratiquement indéfiniment sans risque majeur d'endommager le transpondeur. La nature de l'élément intermédiaire de connexion 4 n'a pas non plus d'influence majeure sur les procédures de montage ou de démontage du fond, permettant ainsi à un tel transpondeur d'être intégré de cette manière à tout type de montre dont le fond du boîtier est amovible.

Il est bien entendu que, afin de garantir la bonne tenue mécanique du transpondeur, chaque partie du transpondeur peut être intégrée dans un boîtier dans lequel peut optionnellement être coulée de la résine, à l'exception des fils 50 qui doivent de préférence rester libres. Les zones de contact 10, 40 de chaque partie devront toutefois être maintenues accessibles à la surface de ces boîtiers, afin de permettre par leur assemblage le fonctionnement du transpondeur.

L'homme du métier comprendra également qu'il est envisageable d'élaborer un transpondeur selon l'invention comportant plusieurs éléments intermédiaires de connexion. Un transpondeur pourrait ainsi comporter deux éléments intermédiaires de connexion, par exemple deux circuits imprimés, un premier élément intermédiaire de connexion possédant deux zones de contact liées aux contacts du circuit intégré, les zones de contact du second élément intermédiaire de connexion étant alors liées aux extrémités de la bobine faisant office d'antenne. Le transpondeur est ainsi assemblé par l'appui du premier élément intermédiaire de connexion contre le second, de façon à ce que leurs zones de contact soient en contact deux à deux.

Dans un autre exemple d'une telle configuration, il est également possible de réaliser un premier élément intermédiaire de connexion sous la forme d'un connecteur par exemple femelle fixé sur le premier élément de l'objet à marquer et dont les fiches sont reliées au circuit intégré 1. Le deuxième élément intermédiaire de connexion est alors constitué de un ou deux connecteurs mâles fixés aux extrémités des fils 50 et pouvant s'insérer dans le connecteur femelle évoqué précédemment.

Dans les exemples donnés ci-dessus, l'élément intermédiaire de connexion est généralement un élément distinct du transpondeur. L'homme du métier comprendra cependant que cet élément intermédiaire de connexion peut également être solidaire, voire directement intégré, à une des parties du transpondeur. Il peut ainsi par exemple s'agir de connecteurs particuliers fixés directement au circuit imprimé, voire formés dans son boîtier, et dans lesquels viennent se connecter les fils de l'antenne, soit directement, soit à l'aide par exemple de connecteurs mâles enserrant l'extrémité des fils.

Suivant les applications, il est également envisageable d'avoir plusieurs séries de contacts amovibles sur la connexion électrique entre l'antenne et le circuit intégré, ce genre de réalisation présentant toutefois le risque majeur de modifier l'impédance de la bobine et d'augmenter les pertes de signal à chaque paire de contacts, réduisant ainsi la sensibilité en lecture et/ou écriture du transpondeur.

Dans la version préférentielle du transpondeur selon l'invention, les zones de contact 40 permettant de mettre les extrémités 50 de l'antenne 5 en contact avec les zones de contact 10 du circuit imprimé 1 sont formées par des surfaces conductrices sur un circuit imprimé 4. Comme évoqué plus haut, il apparaîtra clairement à l'homme du métier que d'autres formes de réalisation sont possibles pour ces zones de contact. Elles peuvent par exemple être formées par un élément intermédiaire de connexion d'un type différent, par exemple par un support isolant enserrant deux tiges conductrices dont une extrémité est soudée à une des extrémités 50 de l'antenne 5 et l'autre extrémité sert de zone de contact.

Les zones de contact 40 peuvent également être fixées sur ou intégrées dans le deuxième élément de l'objet à marquer sur lequel l'antenne 5 est fixée. Une partie au moins de ce deuxième élément fait alors office d'élément intermédiaire de connexion. Par exemple, ce deuxième élément peut être réalisé en un matériau isolant sur ou dans lequel sont formées des pistes conductrices dont une extrémité est connectée, par exemple soudée, à une des extrémités 50 de l'antenne 5 et dont l'autre extrémité sert de zone de contact 40. La position fixe de ces zones de contact 40 sur le deuxième élément est déterminée de manière à ce que, lorsque le deuxième élément est assemblé au premier élément de l'objet marqué, elles soient directement en appui contre les zones de contact 10 du circuit intégré 1 ou en appui contre des zones de contact d'un autre élément intermédiaire de connexion reliées électriquement au circuit intégré 1. Ainsi, les contacts amovibles sont fermés au moment de l'assemblage du deuxième élément sur le premier élément de l'objet marqué, sans opération supplémentaire préalable de fixation d'un élément intermédiaire. Une telle solution demande cependant que les procédures d'assemblage et de démontage des premier et deuxième éléments entre eux soient adaptées au type d'élément intermédiaire de connexion choisi.

L'homme du métier reconnaîtra également que le type de circuit intégré 1 ou que la forme ou la taille de l'antenne 5 sont indifférents. Le principe de l'invention est applicable à tout type de transpondeur comportant toute forme d'antenne.

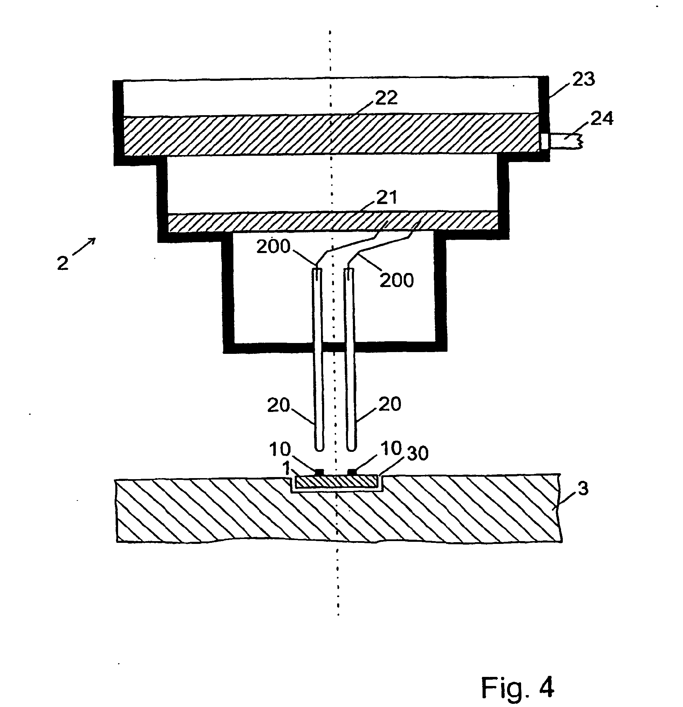

Un avantage supplémentaire du transpondeur selon l'invention est représenté à la figure 4. Grâce à la présence, sur le circuit intégré 1 du transpondeur selon l'invention, de zones de contacts 10 facilement accessibles, il est possible de réaliser un outil de test 2 permettant la lecture et/ou l'écriture de données dans le circuit intégré 1 du transpondeur dans des conditions très proches de celles de son utilisation normale, sans que celui-ci ne soit connecté à son antenne 5.

La version préférentielle d'un tel outil de test 2 est illustrée à la figure 4. L'outil de test 2 comprend deux pattes de contact 20 conductrices, sortant par exemple de son boîtier 23, disposées de manière à pouvoir entrer en contact avec les zones de contact 10 du circuit intégré 1. L'outil comprend également dans le boîtier 23 une antenne 21, de préférence similaire à l'antenne 5 du transpondeur, dont chacune des extrémités 200 est soudée à une des pattes de contact 20. Ainsi, lorsque les pattes de contact 20 de l'outil de test 2 sont en contact avec les zones de contact 10 du circuit intégré 1, ce dernier agit avec l'antenne 21 à la manière d'un transpondeur entièrement fonctionnel. Dans le boîtier 23, l'outil de test 2 comprend également une antenne de lecture 22 maintenue face à l'antenne 21 destinée à être connectée avec le circuit intégré 1. L'antenne de lecture 22 est reliée à un appareil de lecture et/ou d'écriture externe permettant par exemple de tester le fonctionnement du circuit intégré en fin de production, avant son intégration sur l'objet à marquer.

Le circuit intégré 1 à tester est de préférence maintenu sur un banc de test 3 dans lequel est pratiqué un logement 30 lui assurant une position stable et précisément déterminée. L'outil de test 2 est de préférence guidé dans son approche du circuit intégré 1 par un guide non représenté, garantissant un alignement des pattes de contact 20 avec les zones de contact 10. Ce guide est de préférence constitué d'un axe de rotation horizontal auquel l'outil 2 est lié, lui permettant d'approcher le circuit intégré à tester à la manière d'une mâchoire. Dans une autre variante, le guide est constitué d'au moins un axe vertical le long duquel l'outil 2 est glissé.

L'outil 2 décrit ci-dessus peut également être utilisé à d'autres fins que le test du circuit intégré 1. Il peut par exemple servir à la programmation ou à la lecture des données contenues dans le circuit intégré 1 lorsque le deuxième élément de l'objet marqué par le transpondeur sur lequel est fixé l'antenne a été retiré de l'objet.

Dans l'exemple d'application cité plus haut, un tel outil 2 peut par exemple être utilisé lors d'une révision ou d'une réparation de la montre, après que le fond du boîtier en fut retiré, afin par exemple de lire les données concernant l'intervention précédente, ou d'y inscrire les données concernant l'intervention en cours, introduites par exemple à l'aide d'un appareil non représenté, relié à l'antenne de lecture 22 par la connexion 24.

L'homme du métier comprendra que les formes de réalisation de l'outil 2 de l'invention peuvent être fort diverses, dépendant principalement des formes de réalisation du transpondeur selon l'invention auquel il est adapté. Le type de pattes de contacts 20 utilisées, par exemple, doit être choisi en fonction du type des zones de contacts 10 du circuit intégré 1. La disposition des éléments à l'intérieur du boîtier de l'outil peut dépendre aussi par exemple du type d'antenne 5 utilisée habituellement par le transpondeur, l'antenne 21 interne de l'outil 2 devant, dans la mesure du possible, être similaire à l'antenne 5 du transpondeur.

## Revendications

1. Transpondeur comprenant:
un circuit intégré (1),
une antenne (5),
un élément intermédiaire de connexion (4),
ladite antenne (5) étant connectée électriquement de façon amovible audit circuit intégré (1) par l'intermédiaire dudit élément intermédiaire de connexion (4),
ladite antenne (5) étant connectée électriquement audit circuit intégré (1) de façon à pouvoir déplacer ladite antenne (5) par rapport audit circuit intégré (1) sans interrompre ladite connexion électrique,
**caractérisé en ce que** ledit élément intermédiaire de connexion (4) comprend au moins un élément de fixation (41) assurant son positionnement précis lors de l'établissement de ladite connexion électrique.

2. Transpondeur selon l'une des revendications précédentes, ladite connexion électrique étant au moins partiellement effectuée par des fils (50) conducteurs.

3. Transpondeur selon la revendication précédente, lesdits fils (50) étant fibres.

4. Transpondeur selon l'une des revendications précédentes, ladite connexion électrique étant effectuée à travers des contacts amovibles (10, 40), le positionnement d'au moins une partie desdits contacts amovibles (40) étant assuré par ledit élément intermédiaire de connexion (4).

5. Transpondeur selon la revendication précédente, ladite au moins une partie desdits contacts amovibles (40) se trouvant sur ledit élément intermédiaire de connexion (4).

6. Transpondeur selon l'une des revendications 4 ou 5, lesdits contacts amovibles étant constitués de zones de contact (10,40) pouvant entrer en contact deux à deux par appui d'une desdites deux zones de contact (10) contre la deuxième desdites deux zones de contact (40).

7. Transpondeur selon l'une des revendications 4 à 6, ledit élément intermédiaire de connexion étant constitué d'un circuit imprimé (4), ladite au moins une partie desdits contacts amovibles étant constituées de zones de contact (40) sur une première face dudit circuit imprimé (4).

8. Transpondeur selon la revendication précédente, ledit circuit imprimé comportant des trous de fixation (41), la position relative desdits trous de fixation par rapport à ladite au moins une partie desdits contacts amovibles (40) étant prédéterminée avec précision.

9. Transpondeur selon l'une des revendications 7 ou 8, comportant sur la face opposée à ladite première face dudit circuit imprimé (4) des zones de contact permanent (42) permettant de connecter l'antenne (5) de manière fixe, chacune desdites zones de contact permanent (42) étant connectée électriquement à une desdites zones de contact (40) par l'intermédiaire d'un via (43) à travers ledit circuit imprimé (4).

10. Transpondeur selon l'une des revendications précédentes, ladite antenne étant constituée d'une bobine (5) dont les extrémités (50) sont fixées sur ledit élément intermédiaire de connexion (4).

11. Outil (2) pour la lecture et/ou l'écriture des données dans le circuit intégré (1) d'un transpondeur ou pour le test du circuit intégré (1) d'un transpondeur, comprenant:
un boîtier (23),
une antenne (21) apte à collaborer avec ledit circuit intégré (1),
des zones de contact (20) permettant de connecter ledit circuit intégré (1) de manière amovible à ladite antenne (21),
une antenne de lecture (22) destinée à communiquer avec ladite antenne (21),
**caractérisé en ce que** ladite antenne (21) et ladite antenne de lédure (22) sont toutes deux disposées dans ledit boîtier (23),

12. Outil (2) selon la revendication précédente, le mouvement desdites zones de contact (20) lors de la connexion avec ledit circuit intégré étant guidé à l'aide d'au moins un guide.

13. Outil (2) selon la revendication précédente ledit au moins un guide comprenant un axe de rotation horizontal.

## Patentansprüche

1. Transponder, mit:
einem integrierten Schaltkreis (1),
einer Antenne (5),
einem Zwischenverbindungselement (4),
wobei besagte Antenne (5) elektrisch und in abnehmbarer Weise mit besagtem integrierten Schaltkreis (1) durch besagtes Zwischenverbindungselement (4) verbunden ist,
wobei besagte Antenne (5) elektrisch mit dem integrierten Schaltkreis (1) so verbunden ist, dass besagte Antenne (5) in Bezug auf besagten integrierten Schaltkreis (1) bewegt werden kann, ohne besagte elektrische Verbindung zu unterbrechen,
**dadurch gekennzeichnet, dass** besagtes Zwischenverbindungselement (4) mindestens einem Befestigungselement (41) umfasst, das seine genaue Positionierung während der Herstellung besagter elektrischen Verbindung gewährleistet.

2. Transponder gemäss einem der vorhergehenden Ansprüche, wobei die besagte elektrische Verbindung mindestens teilweise durch leitende Drähte (50) erfolgt.

3. Transponder gemäss dem vorhergehenden Anspruch, wobei besagte Drähte (50) frei sind.

4. Transponder gemäss einem der vorhergehenden Ansprüche, wobei die besagte elektrische Verbindung durch abnehmbare Kontakte (10, 40) erfolgt, wobei die Positionierung von mindestens einem Teil der besagten abnehmbaren Kontakte (40) durch das besagte Zwischenverbindungselement (4) gewährleistet wird.

5. Transponder gemäss dem vorhergehenden Anspruch, wobei der besagte mindestens ein Teil der besagten abnehmbaren Kontakte (40) sich auf dem besagten Zwischenverbindungselement (4) befindet.

6. Transponder gemäss einem der Ansprüche 4 oder 5, wobei die besagten abnehmbaren Kontakte aus Kontaktzonen (10, 40) bestehen, welche zwei zusammen durch Anlegung einer der besagten zwei Kontaktzonen (10) gegen die zweite der besagten zwei Kontaktzonen (40) in Kontakt kommen können.

7. Transponder gemäss einem der Ansprüche 4 bis 6, wobei das besagte Zwischenverbindungselement aus einem gedruckten Schaltkreis (4) besteht, wobei der besagte mindestens ein Teil der besagten abnehmbaren Kontakte aus Kontaktzonen (40) auf einer ersten Seite des besagten gedruckten Schaltreises (4) besteht.

8. Transponder gemäss dem vorhergehenden Anspruch, wobei der besagte gedruckte Schaltkreis Befestigungslöcher (41) aufweist, wobei die relative Position der besagten Befestigungslöcher in Bezug auf den besagten mindestens einen Teil der besagten abnehmbaren Kontakte (40) genau vorbestimmt ist.

9. Transponder gemäss einem der Ansprüche 7 oder 8, mit permanenten Kontaktzonen (42) auf der Seite gegenüber der besagten ersten Seite des besagten gedruckten Schaltkreises (4), welche erlauben, die Antenne (5) fest zu verbinden, wobei jede der besagten permanenten Kontaktzonen (42) elektrisch mit einem der besagten Kontaktzonen (40) über einem Via (43) durch den besagten gedruckten Schaltkreis (4) verbunden ist.

10. Transponder gemäss einem der vorhergehenden Ansprüche, wobei die besagte Antenne aus einer Spule (5) besteht, deren Enden (50) auf das besagte Zwischenverbindungselement (4) befestigt sind.

11. Werkzeug (2) zum Lesen und/oder Schreiben von Daten im integrierten Schaltkreis (1) eines Transponders oder zum Testen des integrierten Schaltkreises (1) eines Transponders, mit:
einem Gehäuse (23),
einer Antenne (21), welche fähig ist, mit dem besagten integrierten Schaltkreis (1) zu arbeiten,
Kontaktzonen (20), welche erlauben, den besagten integrierten Schaltkreis (1) in abnehmbarer Weise mit der besagten Antenne (21) zu verbinden,
einer Leseantenne (22) dazu bestimmt, mit der besagten Antenne (21) zu kommunizieren,
**dadurch gekennzeichnet, dass** die besagte Antenne (21) und die besagte Leseantenne (22) beide in besagtem Gehäuse (23) angeordnet sind.

12. Werkzeug (2) gemäss dem vorhergehenden Anspruch, wobei die Bewegung der besagten Kontaktzonen (20) während der Verbindung mit dem besagten integrierten Schaltkreis mit Hilfe von mindestens einem Führer geführt wird.

13. Werkzeug (2) gemäss dem vorhergehenden Anspruch, wobei der mindestens ein Führer eine waagrechte Drehachse umfasst.

## Claims

1. Transponder, including:
an integrated circuit (1),
an antenna (5),
an intermediary connection element (4),
said antenna (5) being connected electrically in removable fashion to said integrated circuit (1) through said intermediary connection element (4),
said antenna (5) being connected electrically to said integrated circuit (1) so as to be able to displace said antenna (5) relatively to said integrated circuit (1) without interrupting said electric connection,
**characterized in that** said intermediary connection element (4) includes at least one fastening element (41) ensuring its accurate positioning when said electric connection is established.

2. Transponder according to one of the preceding claims, said electric connection being at least partially performed by conductor wires (50).

3. Transponder according to the preceding claim, said wires (50) being free.

4. Transponder according to one of the preceding claims, said electric connection being performed through removable contacts (10, 40), the positioning of at least part of said removable contacts (40) being ensured by said intermediary connection element (4).

5. Transponder according to the preceding claim, said at least part of said removable contacts (40) being on said intermediary connection element (4).

6. Transponder according to one of the claims 4 or 5, said removable contacts being constituted of contact zones (10, 40) capable of coming into contact two and two in that one of said two contact zones (10) rests against the second of said two contact zones (40).

7. Transponder according to one of the claims 4 to 6, said intermediary connection element being constituted of a printed circuit (4), said at least part of said removable contacts being constituted of contact zones (40) on a first side of said printed circuit (4).

8. Transponder according to the preceding claim, said printed circuit including fastening holes (41), the relative position of said fastening holes relatively to said at least one part of said removable contacts (40) being predetermined accurately.

9. Transponder according to one of the claims 7 or 8, including on the side opposite said first side of said printed circuit (4) permanent contact zones (42) allowing the antenna (5) to be connected in fixed manner, each of said permanent contact zones (42) being connected electrically with one of said contact zones (40) through a through-hole (43) through said printed circuit (4).

10. Transponder according to one of the preceding claims, said antenna being constituted of a coil (5) whose extremities (50) are fastened onto said intermediary connection element (4).

11. Tool (2) for reading and/or writing data in the printed circuit (1) of a transponder or for testing the integrated circuit (1) of a transponder, including:
a casing (23),
an antenna (21) capable of working with said integrated circuit (1),
contact zones (20) allowing said integrated circuit (1) to be connected in removable fashion with said antenna (21),
a reading antenna (22) designed to communicate with said antenna (21),
**characterized in that** said antenna (21) and said reading antenna (22) are both placed in said casing (23).

12. Tool (2) according to the preceding claim, the movement of said contact zones (20) during connection with said integrated circuit being guided with the aid of at least one guide.

13. Tool (2) according to the preceding claim, said at least one guide including a horizontal rotation axis.
